# EUROPÄISCHE PATENTSCHRIFT

(11) **EP 2 744 033 B1**
(45) Veröffentlichungstag und Bekanntmachung des Hinweises auf die Patenterteilung: **18.02.2015**
(21) Anmeldenummer: 12196193.2
(22) Anmeldetag: 07.12.2012
(51) Int. Cl.: H01M 10/613, H01M 10/617, H01M 10/643, H01M 10/6557, H01M 10/6567, H01M 10/658, F28F 3/12, F28F 9/02, H01M 2/10

(54) **Batterie**
Battery
Batterie

(43) Veröffentlichungstag der Anmeldung: 18.06.2014
(73) Patentinhaber: Obrist Powertrain GmbH, 6890 Lustenau (AT)
(72) Erfinder: Obrist, Frank, 6900 Bregenz (AT); Graz, Martin, 6890 Lustenau (AT); Giese, Peter, 91074 Herzogenaurach (DE); Obrist, Oliver, 6850 Dornbirn (AT)
(74) Vertreter: Bohnenberger, Johannes

(56) Entgegenhaltungen:
- DE-U1-202007 017 390
- GB-A- 956 553
- US-A- 4 517 263
- US-A- 5 205 348
- US-A1- 2009 297 892

## Beschreibung

Die Erfindung betrifft eine Batterie mit in mehreren Reihen nebeneinander angeordneten, parallel und seriell elektrisch zu mindestens einem Zellenblock miteinander verbundenen Stabzellen, die in thermisch leitendem Kontakt mit mindestens einem Kühlelement stehen.

Durch die DE 10 2006 059 989 A1 ist es bekannt, einen runden Querschnitt aufweisende Stabzellen einer Batterie durch Mantelkontakt mit als Gusskörper hergestellten Wärmeleitelementen zu kühlen, die sich von einer gemeinsamen Grundplatte aus, einstückig mit dieser, zwischen die Stabzellen hinein erstrecken. Dabei wird diese Grundplatte ihrerseits durch eine sich in ihrer Ebene erstreckende Kühlschlange gekühlt.

Weitere Ausführungsbeispiele von Batterien, bei denen Stabzellen über ihre Mantelfläche gekühlt werden, sind durch die DE 10 2009 033 076 A1, die DE 10 2011 017 375 A1 oder die JP 4 176 911 A bekannt. Ferner beschreiben die DE 20 2007 017 390 U1, US 2009/0297892 A1, US 5,205,348 A, GB 956 553 A und US 4,517, 263 A durch Wärmetauscherelemente gekühlte Batterien.

Diese bekannten Batterien veranschaulichen den relativ grossen konstruktiven Aufwand für die Herstellung eines thermisch leitenden Kontaktes eines Wärmetauschers mit der Mantelfläche oder einem Bereich der Mantelfläche der Stabzellen, um deren Überhitzung zu verhindern.

Der Erfindung liegt die Aufgabe zugrunde eine Batterie der genannten Art zu finden, die ein hochwirksames Wärmeaustauschsystem und eine mechanisch hohe Widerstandsfähigkeit aufweist und die dennoch als Massenprodukt besonders einfach und damit kostengünstig herstellbar ist.

Die Lösung der Aufgabe erfolgt erfindungsgemäss dadurch, dass endseitige elektrische Kontakte einer sich über eine Breite einer Batterie erstreckenden Reihe von Stabzellen jeweils durch eine gemeinsame Kontaktplatte elektrisch parallel miteinander verbunden sind und diese Kontaktplatten in wärmeleitender Verbindung mit einem sich parallel zu ihr erstreckenden, flüssigkeitsdurchströmten, flachen Wärmetauscher stehen.

Die elektrische und mechanische Verbindung der Kontakte der Stabzellen mit der Kontaktplatte kann auf hochproduktive Weise durch punktweises Laserschweissen entsprechend der Scannerschweisstechnik über z.B. jeweils vier Schweisstellen an jedem Ende der Stabzellen erfolgen.

Die Erfindung beruht u.a. auf der Erkenntnis, dass die erforderliche Kühlung der Stabzellen wesentlich wirkungsvoller ist, wenn diese über deren beide metallischen Endbereiche, d.h. deren Pole direkt erfolgt, anstatt über ihre eine Kunststoffbeschichtung aufweisende Mantelfläche, da diese Endbereiche entsprechend allgemein bekanntem inneren Aufbau in elektrisch und damit auch gut thermisch leitender Verbindung mit grossflächigen inneren, Kathode und Anode bildenden Metallfolien stehen.

In bevorzugter Ausführungsform der Erfindung befindet sich ein solcher Wärmetauscher in unmittelbarem Kontakt mit der elektrisch verbindenden Kontaktplatte. Erfindungsgemäß ist der Wärmetauscher als Wärmeaustauschtasche aus einem mehrschichtigen, eine elektrisch isolierende Aussenschicht aufweisenden Folienmaterial hergestellt.

Ein derartiger, über mindestens eine Reihe von Stabzellen erstreckender Wärmetauscher lässt sich im Vergleich zu plattenförmigen oder gitterförmigen Gusskörpern des genannten Stands der Technik, wesentlich einfacher durch Ausstanzen von Folienstücken entsprechend ihrer angestrebten Form und Grösse, deren aufeinanderliegende Anordnung zueinander und Verschweissen entlang ihrer Ränder herstellen.

Die Herstellung aus einem Folienmaterial gewährleistet auch eine gut wärmeleitende, schmiegsame Anlage des Wärmetauschers an einer oder mehreren parallel zueinander verlaufenden elektrischen Kontaktplatten der genannten Art.

Die jeweils an beiden Enden der Stabzellen vorgesehenen elektrischen Kontaktplatten lassen sich in passender Form und Grösse auf einfache Weise aus einem gut leitenden und korrosionsbeständigen Blech ausstanzen, wie z.B. aus einem eine metallische äussere Korrosionsschutz aufweisendes Eisenblech.

Um eine Beschädigung des Folienmaterials des Wärmetauschers zu vermeiden, werden die ausgestanzten Kontaktplatten derart angeordnet, dass sich der Stanzgrat auf der dem Wärmetauscher abgekehrten Seite befindet.

In bevorzugter Ausführungsform der Erfindung ist zwischen den beiden Folienwänden des Wärmetauschers ein Strömungsleitgitter eingeschlossen, um den Wärmeträger bei seiner Durchströmung vom Einlass- zum Auslassbereich auf eine für den Wärmeaustausch optimalen Weise über die Innenflächen des Wärmetauschers zu verteilen. Ausserdem dient das Strömungsleitgitter als Abstandshalter für die Folienwände des Wärmetauschers.

Weiterhin ist erfindungsgemäß parallel zu dem aus Folienmaterial hergestellten Wärmetauscher eine mindestens angenähert seiner Grösse entsprechende Drucktasche vorgesehen. Nach Füllen der Drucktasche mit einem Pressmedium, wie z.B. Luft oder Stickstoff und deren dichten Verschliessen liegt der Wärmetauscher mit dem Fülldruck der Drucktasche an mindestens einer der elektrischen Kontaktplatte fest an, so dass eine gute Wärmeleitung an diese und zu den Stabzellen gewährleistet ist.

Für eine gleichmässige Verteilung des von der Drucktasche ausgeübten Druckes kann in weiterer Ausführungsform der Erfindung zwischen der Drucktasche und dem Wärmetauscher eine Druckverteilungsplatte angeordnet sein.

Weitere vorteilhafte Ausgestaltungen der Erfindung sind den Patentansprüchen zu entnehmen und im Folgenden anhand der Zeichnungen beschrieben. Es zeigt:
Fig. 1 eine perspektivische Darstellung eines inneren Aufbaus einer Batterie bei weggelassener Gehäuseschale und ohne seitliche Drucktaschen, mit in vier Ebenen übereinander angeordneten Gruppen von Stabzellen,
Fig. 2 in mehreren Reihen nebeneinander und in gleicher Ebene angeordneten und teilweise durch Kontaktplatten verbundenen Stabzellen, in perspektivischer Darstellung,
Fig. 3 einen Bereich der Darstellung nach Fig.1 bei weggelassenem oberen Wärmetauscher und mit seitlicher Drucktasche,
Fig. 4 einen Vertikalschnitt durch einen Eckbereich einer erfindungsgemässen Batterie, einschliesslich ihrer Gehäuseschale,
Fig. 5 eine perspektivische Darstellung eines inneren Aufbaus einer Batterie entsprechend Fig.1 mit zusätzlicher oberer und seitlicher Drucktasche,
Fig.6 eine grössere perspektivische Darstellung des Anschlussbereichs der Batterie nach Fig.5,
Fig. 7 eine perspektivische Darstellung des Gehäuses einer Batterie nach Fig. 1 - 6 bei entfernter, anschlussseitiger Verschlusswand,
Fig. 8 eine schematische Darstellung von vier übereinander angeordneten Zellenblöcken in schmalseitiger und längsseitiger Ansicht,
Fig. 9 eine schematische Darstellung von jeweils zwei nebeneinander und übereinander angeordneten Zellenblöcken in zwei Seitenansichten,
Fig. 10 eine schematische Darstellung von vier in Reihe nebeneinander angeordneten Zellenblöcken in zwei Seitenansichten,
Fig. 11 einen Vertikalschnitt durch eine Batterie mit vier übereinander angeordneten Zellenblöcken,
Fig. 12 einen vergrösserten Teilschnitt durch die Batterie nach Fig. 11 in deren Bereich XII und
Fig.13 einen Teilschnitt in einem Winkelbereich eines Innenbehälters einer erfindungsgemässen Batterie.

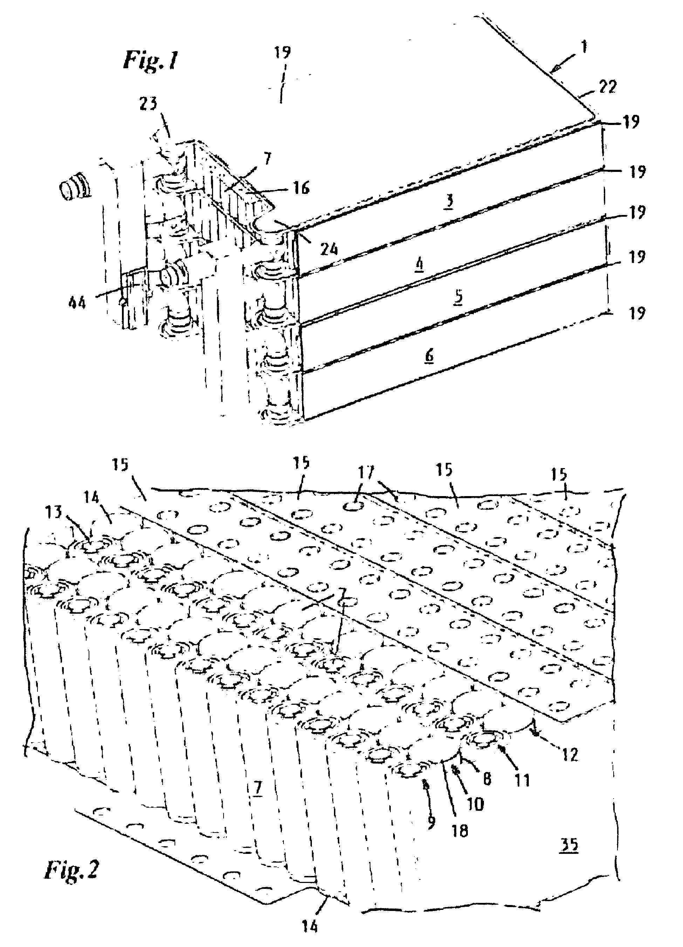

Eine erfindungsgemässe Batterie 1, die in den Fig. 1 bis 3 ohne ein umkleidendes und thermisch isolierendes Gehäuse 2 dargestellt ist, hat zahlreiche, jeweils in einem gemeinsamen Zellenblock 3 - 6 vereinigte elektrische Stabzellen 7. Derartige Stabzellen 7 sind allgemein bekannt und im Fachhandel erhältlich. Ein Ausführungsbeispiel ist in der DE 2 257 723 A1 beschrieben. Als Lithium-lonenzellen haben sie eine besonders hohe elektrische Leistungsfähigkeit.

Die Anordnung der Stabzellen 7 innerhalb eines Zellenblockes 3 - 6 erfolgt jeweils mit einer Lücke 8 zwischen ihnen, in mehreren Reihen 9 - 12 vorzugsweise derart, dass die Stabzellen 7 benachbarter Reihen 9 - 12, für eine kompakte Anordnung, zueinander querversetzt sind. Dabei sind für eine elektrisch serielle Verbindung die endseitigen Pole 13, 14 der Stabzellen 7 benachbarter Reihen 9 - 12 zueinander entgegengesetzt ausgerichtet.

Die genannte Lücke 8 zwischen den zahlreichen Stabzellen 7 ermöglicht deren unbehinderte thermische Ausdehnung und gestattet Toleranzen hinsichtlich ihrer Form, Ausrichtung und Anordnung beim reihenförmigen Einordnen zu einem Zellenblock 3 - 6.

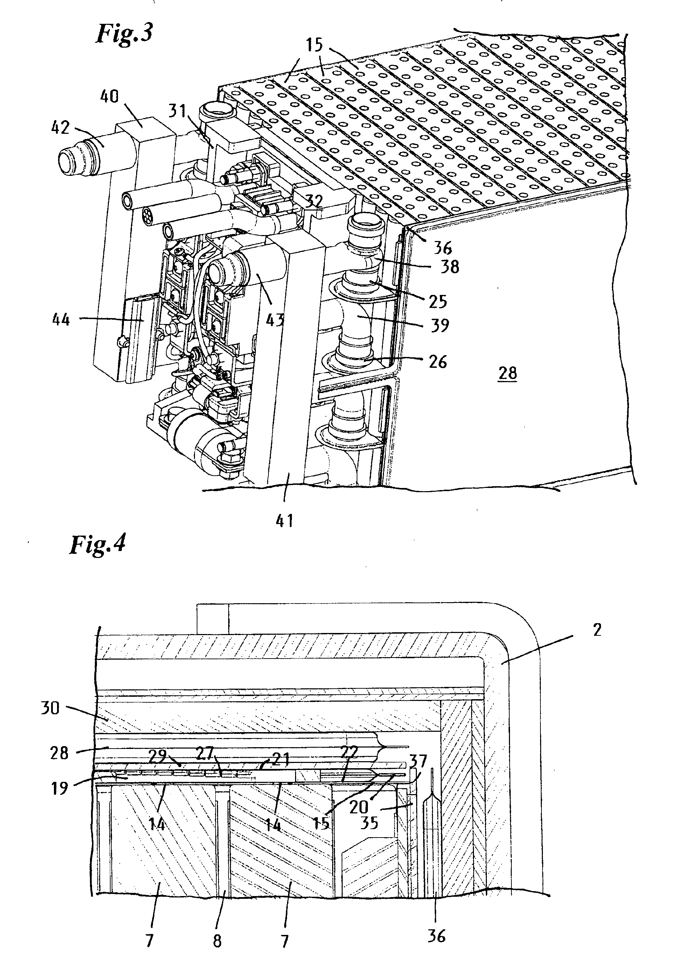

Eine sich jeweils über zwei zueinander parallele Reihen 9, 10 oder 11, 12 von Stabzellen 7 erstreckende Kontaktplatte 15 verbindet diese miteinander einerseits in Richtung der jeweiligen Reihe elektrisch parallel und anderseits quer dazu auch elektrisch seriell. Die Darstellung von Fig.3 veranschaulicht, wie folglich, für jeweils zwei Reihen von Stabzellen 7, zahlreiche langgestreckte und entsprechend schmale Kontaktplatten 15 mit isolierendem Abstand parallel zueinander in derselben Ebene angeordnet sind.

Da auf gleiche, nicht dargestellte Weise parallel zueinander verlaufende Reihen 9 -12 von Stabzellen 7 auch an ihrer Unterseite bzw. ihrem Gegenpol durch eine untere Kontaktplatte 15 parallel und seriell elektrisch miteinander verbunden sind, addieren sich die Spannungswerte der Zellenreihen zu einem Gesamtwert des betreffenden Zellenblocks 3 -6. Dabei sind die Stabzellen 7 der ersten Reihe 9 des Zellenblocks 3 durch eine entsprechend schmalere oder streifenförmige Kontaktplatte verbunden, die über eine seitliche Plattenerweiterung eine end- oder anfangsseitige Kontaktfahne 16 bildet.

Eine elektrisch und thermisch gut leitende und mechanisch feste Verbindung der endseitigen Pole 13, 14 der Stabzellen 7 mit den sich jeweils über die gesamte innere Breite der Batterie 1 erstreckenden Kontaktplatten 15 erfolgt mit hoher Geschwindigkeit durch punktweises Scannerschweissen, vorzugsweise über mehrere, z.B. jeweils vier gleichmässig über die Kontaktfläche verteilte Schweisspunkte 17, so dass sich die Erfindung auch aufgrund der hohe Arbeitsgeschwindigkeit eines solchen Schweissverfahrens besonders kostengünstig realisieren lässt.

Die Erfindung beruht u.a. auf der Erkenntnis, dass die erforderliche Kühlung der Stabzellen 7 wesentlich verbessert werden kann, wenn diese über deren metallischen Endbereiche, d.h. deren Pole 13, 14 direkt erfolgt, anstatt über ihre eine Kunststoffbeschichtung aufweisende Mantelfläche, da diese Endbereiche in elektrisch und damit auch gut thermisch leitender Verbindung mit grossflächigen inneren, Kathode und Anode bildenden Metallfolien stehen.

Um zu verhindern, dass ein überstehender Randbereich eines die Stabzellen 7 umhüllenden Zellenmantels den Kontakt mit der Kontaktplatte 15 behindert, werden Stabzellen 7 verwendet, bei denen der Zellenmantel mit einem Abstand 18 von dem flachen Pol 14 endet.

Für die Ableitung der bei elektrischer Belastung der Batterie 1 in den Stabzellen 7 entstehenden Wärme und auch um eine Mindesttemperatur für ihren Betrieb aufrecht zu erhalten, stehen die elektrischen Kontaktplatten 15 in eng anliegendem, wärmeleitendem Kontakt mit einer Wärmeaustauschtasche 19. Diese besteht aus zwei parallel zueinander verlaufenden, durch ein mehrschichtiges Folienmaterial gebildeten dünnen Wänden 21, 22, die entlang ihrer Ränder 20 durch eine umlaufende Schweissnaht dicht miteinander verbunden sind.

Ein geeignetes Folienmaterial für die Herstellung der Wärmeaustauschtasche 19 besteht zur Optimierung seiner Eigenschaften hinsichtlich Reissfestigkeit, Materialbeständigkeit, thermischer Leitfähigkeit, elektrischer Isolation und Schweissbarkeit aus einem Schichtverbund aus unterschiedlichen Materialien, wie z.B. Aluminium, Polyamid, Polypropylen und ist für verschiedene Zwecke im Handel mit einer Foliendicke von weniger als 0,2 mm erhältlich.

Aufgrund der bevorzugten direkten oder engen Anlage an den elektrischen Kontaktplatten 15 ist ein Folienmaterial zu verwenden, dessen Aussenschicht elektrisch isolierend wirkt.

Um eine Beschädigung dieser Aussenschicht aufgrund ihrer Anlage an den Kontaktplatten 15 und deren Seitenkanten zu verhindern, werden diese so angeordnet, dass der bei ihrem Ausstanzen entstehende Stanzgrat von der Wärmeaustauschtasche 19 weggerichtet ist und folglich nur die im Querschnitt abgerundete Stanzkante an ihr anliegt.

Wie die Darstellung in Fig.1 zeigt, erstrecken sich Wärmeaustauschtaschen 19 beidseitig über die gesamte Ober- und Unterseite jedes Zellblockes 3 - 6, so dass diese und die in ihnen vereinigten Stabzellen 7 durch sie beidseitig temperiert werden. Entsprechend hat jede der Wärmeaustauschtaschen 19 beispielsweise die Form eines Rechtecks, entsprechend der Form eines Horizontalquerschnitts eines Zellenblockes 3 - 6.

Im Bereich von zwei schmalseitig einander gegenüberliegenden Eckbereichen der Wärmeaustauschtaschen 19 haben diese angenähert halbkreisförmig abstehende Fortsätze 23, 24 für den Anschluss von vertikal zur Ebene der betreffenden Wärmeaustauschtasche 19 gerichtete Anschlussstutzens 25, 26, für die Zu- und Ableitung und damit Zirkulation eines Wärmeträgers durch die Wärmeaustauschtaschen 19.

Im Verhältnis zu einem eine ausreichende Durchströmung ermöglichenden, relativ geringen Abstand zwischen den Wänden 21,22 der Wärmeaustauschtaschen 19 von beispielsweise 2 mm, kann somit der durchströmte Innendurchmesser der Anschlussstutzen 25, 26 relativ gross ausgeführt sein, so dass eine entsprechend grosse Fördermenge des Wärmeträgers und folglich ein besonders wirksamer Wärmeaustausch mit geringen Temperaturunterschieden innerhalb der Wärmeaustauschtasche 1 realisierbar ist.

Für eine den Wärmeaustausch begünstigende, gleichmässige Strömungsverteilung bei der Durchströmung der Wärmeaustauschtaschen 19 von ihrem Zuströmstutzen 25 zu ihrem Abströmstutzen 26 ist zwischen den beiden Wänden 2, 3 der Wärmeaustauschtasche 1 ein Strömungsleitgitter 27 vorgesehen, das aus miteinander verbundenen Strömungsleitstegen besteht, so dass längs- und quergerichtete Strömungswege begrenzt werden.

Ein solches Strömungsleitgitter 27 kann kostengünstig als Spritzgiessteil z.B. aus einer Aluminiumlegierung oder aus Kunststoff hergestellt werden und bei der Herstellung der Wärmeaustauschtasche 19 zwischen deren Folienwänden 21, 22 eingelegt werden, bevor diese entlang der Ränder 20 miteinander verschweisst werden.

Das Strömungsleitgitter 27 bildet zusätzlich zu dem durch den durchströmenden Wärmeträger gebildeten Innendruck eine innere Abstützung der Folienwände 21, 22, die z.B. 2mm beträgt.

Für eine gleichmässige Anpressung der Wärmeaustauschtaschen 19 an die Kontaktplatten 15 und damit einen guten wärmeleitenden Kontakt sowie gleichmässige Druckbelastung des in ihr eingeschlossenen Strömungsleitgitters 27 ist eine durch ein Druckmedium wie z.B. Luft oder Stickstoff gefüllte Drucktasche 28 vorgesehen, und eine zwischen dieser und der Wärmeaustauschtasche 19 vorgesehene Druckverteilungsplatte 29 gewährleistet eine gleichmässige Druckübertragung auf diese und auf die Enden der Stabzellen 7. Auf diese Weise ist für diese eine gute Temperierung und erschütterungsfeste Halterung gewährleistet. Dabei stützt sich die Drucktasche 28 mit ihrer der Wärmeaustauschtasche 1 abgekehrten Seite an der Innenfläche einer thermisch isolierenden Innenwand 30 des Batteriegehäuses 2 ab.

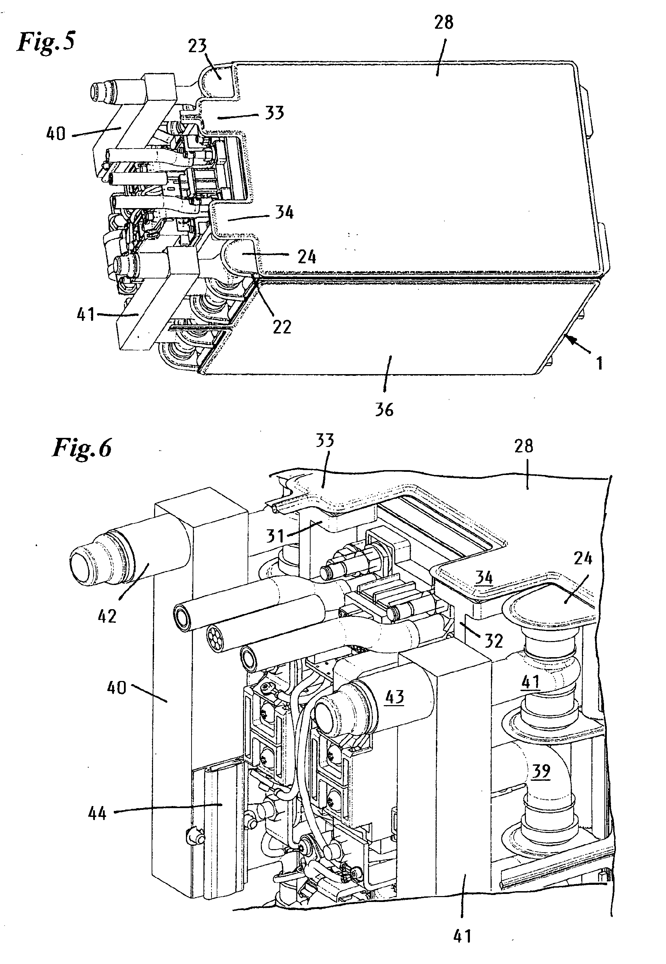

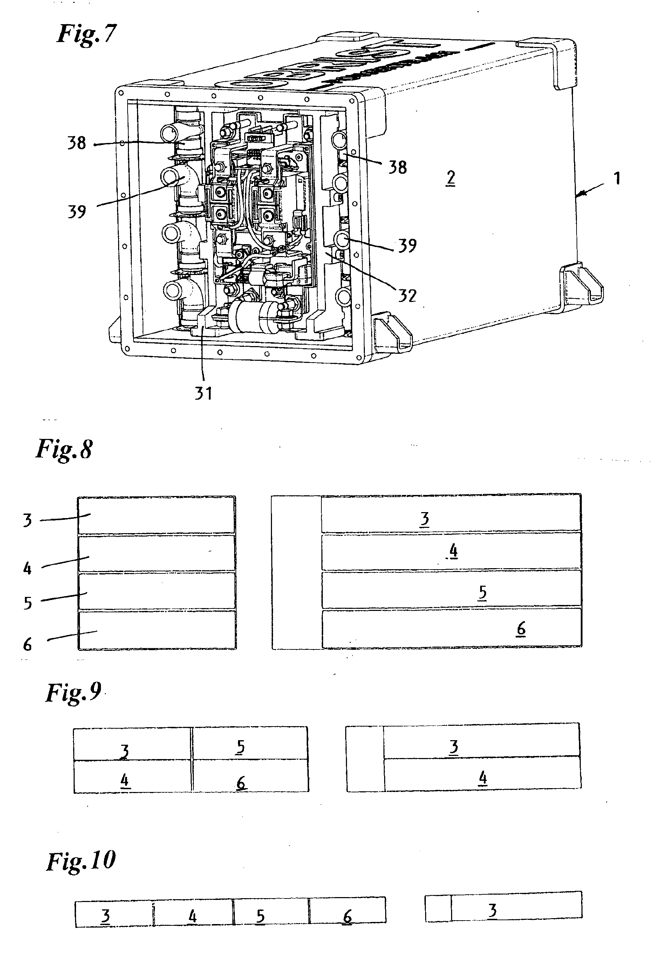

Zusätzlich dient die obere Drucktasche 28 der Verspannung von Tragprofilen 31, 32, an denen elektrische Komponenten einer Batteriesteuerung (BMS / Battery Management Systems) sowie Anschlusskomponenten (25, 26) für die Zirkulation des Wärmeträgers befestigt sind, so dass die gemeinsame Verspannung dieser Komponenten mit den Zellblöcken 3 -6 verhindert, dass auf die Batterie 1 einwirkende Trägheitskräfte zu Schäden an den mechanischen und elektrischen Verbindungen zwischen den zahlreichen Komponenten der Batterie führen. Hierfür hat diese Drucktasche 28 zwei Taschenfortsätze 33,34, die am oberen T-förmigen Ende dieser vertikal ausgerichteten Tragprofile 31, 32 anliegt. Mit ihrem unteren Ende stützen sich die Tragprofile 31, 32 mit einem T-förmigen Endbereich an der unteren Wand des Batteriegehäuses bzw. seiner unteren Auskleidung ab, wie die Darstellungen der Fig.6 und 7 veranschaulichen

Eine weitere Druckverteilungsplatte 35 mit anliegender Drucktasche 36 dient der Halterung der Kontaktplatten 15 und damit der mit ihnen durch Punktschweissen verbundenen Stabzellen 7 in Richtung ihrer Ebene, indem sie an deren Endkante 37 anliegt, wie es die Teilschnittdarstellung der Fig. 4 zeigt.

Für die Erhöhung der elektrischen Spannung der Batterie 1 und damit ihrer Leistungsfähigkeit sind vorzugsweise mehrere Zellenblöcke 3 - 6 elektrisch hintereinander bzw. in Reihe miteinanderverbunden. Dies kann in optimaler Anpassung an die Geometrie eines mit einer solchen Batterie auszurüstenden Fahrzeuges mit unterschiedlicher gegenseitiger Zuordnung der Zellenblöcke 3 - 6 erfolgen, wie die schematischen Darstellungen der Fig. 8 - 10 zeigen. Dabei entspricht das Ausführungsbeispiel nach Fig.8 demjenigen der Fig. 1, 3 und 5 bis 7.

Entsprechend dem Ausführungsbeispiel nach Fig.9 hat eine Batterie 1 je zwei übereinander und nebeneinander angeordnete Zellenblöcke 3 -6, die auf nicht dargestellte Weise elektrisch in Reihe miteinander verbunden sind.

Das Ausführungsbeispiel nach Fig. 10 zeigt vier in Reihe zu einem Strang miteinander verbundene Zellenblöcke 3 - 6.

Allen Batterien 1 mit verschiedenen gegenseitigen Zuordnungen einzelner Zellenblöcke 3 - 6 entsprechend den Darstellungen in Fig.8 bis Fig.10 ist gemeinsam, dass sie aufgrund ihres raumsparenden Kühlsystems und der damit verbundenen kompakten Bauweise ihrer Zellenblöcke 3 - 6 relativ kleine Gesamtabmessungen aufweisen, mit entsprechendem Vorteil bei der Anordnung in einem elektrisch betriebenen Fahrzeug.

Bei der besonders kompakten Ausführung einer Batterie 1 mit nur übereinander angeordneten Zellenblöcken 3 - 6 und folglich zueinander parallelen Wärmeaustauschtaschen 1 können deren Anschlussstutzen 25, 25 raumsparend gleichachsig übereinander im Bereich einer stirnseitigen Seitenfläche der Batterie 1 vorgesehen sein und über eine T-förmige Abzweigung 38 und 90°-Krümmer 39 an parallel dazu verlaufenden, gemeinsamen Anschlussleitungen 40, 41 angeschlossen sein, um sie über an ihnen vorgesehene Anschlussstutzen 42, 43 mit einer nichtdargestellten Umwälzpumpe und zu einem äusseren, nicht dargestellten Wärmetauscher zu verbinden.

Eine für die stabförmigen Batteriezellen 7 und deren Leistungsfähigkeit z.B. im Winterbetrieb schädliche Abkühlung kann vorzugsweise in Kombination mit einer thermischen Isolierung der Batterie durch einen an einer der Anschlussleitungen befestigten, über eine Thermostatschaltung elektrisch betriebenen Heizkörper 44 verhindert werden.

Für die thermische Isolierung ist in einen z.B. aus Stahl oder einer Aluminiumlegierung gebildeten, die Aussenfestigkeit der Batterie 1 gewährleistenden Aussenbehälter 45 ein aus Isoliermaterial schachtelförmig vorgeformter Innenbehälter 46 teleskopartig eingeschoben. Für seinen anschliessend erfolgenden Verschluss nach aussen ist eine umschliessende, Verschlusskappe 47 teleskopartig dichtend eingefügt.

Nach schichtweisem Einschieben der Zellenblöcke 3 bis 6 zusammen mit Wärmeaustauschtaschen 19, Druckverteilungsplatten 29 und Drucktaschen 28 in den Innenbehälter 46, lässt sich dieser durch teleskopartiges Einschieben einer ebenfalls aus Isoliermaterial bestehenden Verschlusskappe 47 dicht verschliessen. Dabei sind die elektrischen Leitungen und die Anschlussleitungen für das Kühlmedium auf nicht dargestellte Weise durch diese Verschlusskappe 47 hindurchgeführt.

Für eine kompakte Bauweise der Batterie 1 und eine dennoch sehr gute thermische Isolation ist dieser Innenbehälter 46, mit einer Wanddicke von z.B. nur 5 mm, aus einem besonders hochwirksamen Isoliermaterial hergestellt, das nach Art eines Vakuum-Paneels zwischen einer Aussenwand 48 und einer Innenwand 49 ein körniges Material 50, wie z.B. Kieselsäure einschliesst und unter Vakuum gesetzt ist.

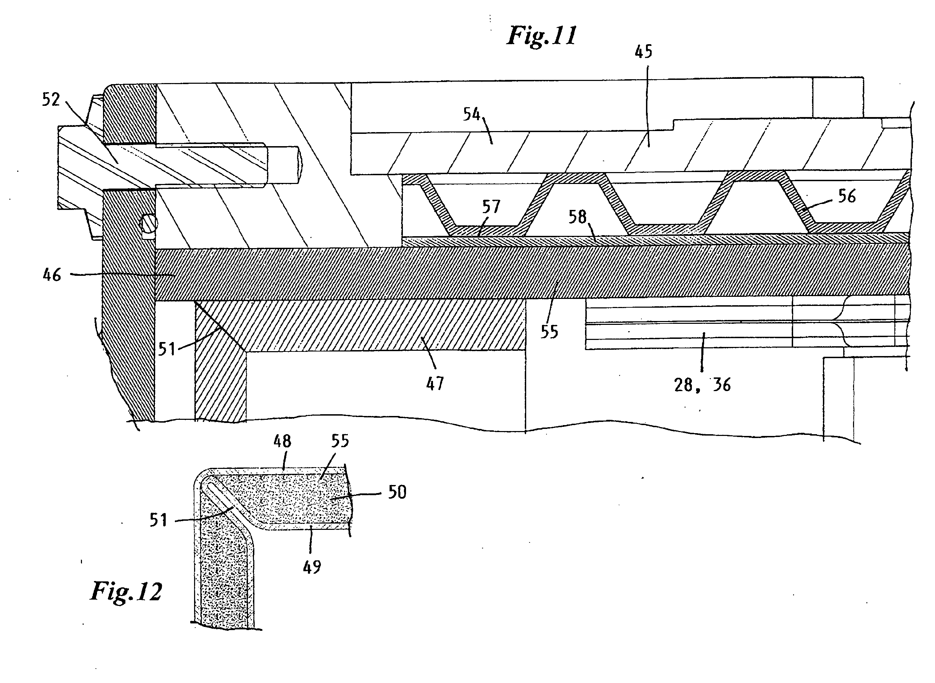

Da sich ein solches Isoliermaterial nicht zerstörungsfrei biegen oder knicken lässt, sind für eine einstückige Herstellung der Verschlusskappe 47 in der Innenschicht 49 des Ausgangsmaterials im Querschnitt v-förmige Knickrillen vorgesehen, so dass sich nach Fertigstellung der schachtelförmigen Verschlusskappe 47 entlang solcher Knickrillen jeweils eine Knickfalte 51 bildet, wie sie in Fig.12 gezeigt ist.

Ausserdem ist aus solchem Isoliermaterial ein am Aussenbehälter 45 stirnseitig mittels Schraubbolzen 52 angeflanschter Verschlussdeckel 53 geformt.

Um eine Ausbiegung der möglichst dünn ausgeführten Wand 54 des Aussenbehälters 45 unter dem die innere Verspannung der Zellenblöcke 3 - 6 gewährleistenden Druck der Drucktaschen 28 und 36 zu verhindern, ist parallel zu den Drucktaschen 28, 36 und zwischen dieser Wand 54 und der Wand 55 des thermisch isolierenden Innenbehälters 46 eine biegesteife Aussteifungsschicht 56 z.B. aus Stahlblech oder Aluminiumblech vorgesehen. Ihre Biegesteifigkeit ergibt sich durch eine ihrer Schichtdicke entsprechende, wellenförmige und Abflachungen 57 aufweisende Profilierung.

Um zu verhindern, dass durch diese Profilierung an der angrenzenden Wand 55 des Innenbehälters 46 ungleichmässige Pressungen entstehen, ist weiterhin zwischen dieser und der Aussteifungsschicht 56 eine z.B. aus Kunststoff oder einer Aluminiumlegierung gefertigte Druckverteilungsplatte 58 eingeschoben.

### Bezugszeichenliste

- 1: Batterie
- 2: Gehäuse
- 3 - 6: Zellenblöcke
- 7: Stabzellen
- 8: Lücke
- 9 - 12: Reihen
- 13, 14: Pole
- 15: Kontaktplatte
- 16: Kontaktfahne
- 17: Schweisspunkte
- 18: Abstand vom Pol
- 19: Wärmeaustauschtasche
- 20: Folienränder
- 21, 22: Folienwände
- 23, 24: Folienfortsätze
- 25, 26: Anschlussstutzen
- 27: Strömungsleitgitter
- 28: Drucktasche
- 29: Druckverteilungsplatte
- 30: Gehäuseinnenwand
- 31,32: Tragprofile
- 33, 34: Taschenfortsätze
- 35 2.: Druckverteilungsplatte
- 36: Drucktasche
- 37: Endkante
- 38: T-Abzweigung
- 39: Krümmer
- 40, 41: Anschlussleitungen
- 42, 43: Anschlussstutzen
- 44: Heizkörper
- 45: Aussenbehälter
- 46: Innenbehälter
- 47: Verschlusskappe
- 48: Aussenwand
- 49: Innenwand
- 50: Kornmaterial
- 51: Knickfalte
- 52: Schraubbolzen
- 53: Verschlussdeckel
- 54: Wand des aussenbehälters
- 55: Wand des Innenbehälters
- 56: Aussteifungsschicht
- 57: Abflachung
- 59: Druckverteilungsplatte

## Patentansprüche

1. Batterie mit in mehreren Reihen nebeneinander angeordneten, parallel und seriell elektrisch zu mindestens einem Zellenblock (3 - 6) miteinander verbundenen Stabzellen (7), die in thermisch leitendem Kontakt mit mindestens einem Kühlelement (19) stehen, **dadurch gekennzeichnet, dass** endseitige elektrische Kontakte (13, 14) einer sich über eine Breite der Batterie erstreckenden Reihe von Stabzellen (7) jeweils durch eine gemeinsame Kontaktplatte (15) elektrisch parallel miteinander verbunden sind und diese Kontaktplatten (15) in wärmeleitender Verbindung mit einem sich parallel zu ihr erstreckenden, flüssigkeitsdurchströmten, flachen Wärmetauscher (19) stehen, der aus einem eine Wärmeaustauschtasche (19) bildenden Folienmaterial besteht, wobei parallel zu der Wärmeaustauschtasche (19) eine mindestens angenähert ihrer Größe entsprechende, mit einem kompressiblen Medium gefüllte Drucktasche (28) vorgesehen ist.

2. Batterie nach Anspruch 1, **dadurch gekennzeichnet, dass** der Wärmetauscher (19) sich in unmittelbarem Kontakt mit der elektrisch verbindenden Kontaktplatte (15) befindet und zumindest seine an ihr anliegenden Oberfläche aus einem elektrisch isolierenden Material besteht.

3. Batterie nach Anspruch 1 oder 2, **dadurch gekennzeichnet, dass** das Folienmaterial mehrschichtig ist und die Aussenschicht aus einem elektrisch isolierenden Material besteht.

4. Batterie nach Anspruch einem der Ansprüche 1 bis 3, **dadurch gekennzeichnet, dass** eine gemeinsame Kontaktplatte (15) sich jeweils über die gesamte Länge von zwei zueinander parallelen verlaufenden Reihen von Stabzellen (7) erstreckt, so dass jeweils an beiden Enden der Stabzellen (7) vorgesehene Kontaktplatten (15) diese sowohl parallel als auch seriell miteinander elektrisch und mechanisch verbindet.

5. Batterie nach einem der Ansprüche 1 bis 4, **dadurch gekennzeichnet, dass** die Pole (13, 14) der Stabzellen (7) durch punktweises Laserschweissen entsprechend der Scannerschweisstechnik mit einer Kontaktplatte (15) verbunden sind.

6. Batterie nach Anspruch 5, **dadurch gekennzeichnet, dass** für die Verbindung zwischen den Polen (13, 14) der Stabzellen (7) und den Kontaktplatten (15) jeweils mehrere Schweisspunkte (17) vorgesehen sind.

7. Batterie nach einem der Ansprüche 1 bis 6, **dadurch gekennzeichnet, dass** die Kontaktplatten (15) aus Blech ausgestanzt und derart angeordnet sind, dass sich ihr Stanzgrat auf der der Wärmeaustauschtasche (19) abgekehrten Seite befindet.

8. Batterie nach einem der Ansprüche 1 bis 7, **dadurch gekennzeichnet, dass** die Stabzellen (7) mit einer Lücke (8) zwischen ihnen durch die Kontaktplatten (15) befestigt sind.

9. Batterie nach einem der Ansprüche 1 bis 8, **dadurch gekennzeichnet, dass** zwischen den beiden Folienwänden (21, 22) der Wärmeaustauschtasche (19) ein Strömungsleitgitter (27) eingeschlossen.

10. Batterie nach einem der Ansprüche 1-9, **dadurch gekennzeichnet, dass** zwischen der Drucktasche (28) und der Wärmeaustauschtasche (19) eine Druckverteilungsplatte (29, 35) angeordnet ist.

11. Batterie nach einem der Ansprüche 1 bis 10, **dadurch gekennzeichnet, dass** an einer Endkante (37) jeder Kontaktplatte (15) eine sich senkrecht zu ihr erstreckende, durch eine Drucktasche (36) verspannte Druckplatte (35) anliegt.

12. Batterie nach einem der Ansprüche 1 bis 11, **dadurch gekennzeichnet, dass** eine an Kontaktplatten (15) anliegende Wärmeaustauschtasche (19) Anschlussstutzen (25, 26) für ihre Durchströmung durch einen flüssigen Wärmeträger aufweist, die senkrecht zur Ebene der Wärmeaustauschtasche (19) gerichtet sind.

13. Batterie nach einem der Ansprüche 1 bis 12, **dadurch gekennzeichnet, dass** die elektrisch miteinander verbundenen Stabzellen (7) in mehreren übereinander angeordneten Zellenblöcken (3 - 6) gruppiert sind, wobei zwischen jedem dieser Zellenblöcke (3 - 6) und zusätzlich aussen an den äusseren Zellenblöcken (3, 6) dieser Gruppierung jeweils eine Wärmeaustauschtasche (19) vorgesehen ist.

14. Batterie nach Anspruch 12 und 13, **dadurch gekennzeichnet, dass** die an jeder der zueinander parallelen Wärmeaustauschtaschen (1) der Zellenblöcke (3 - 6) vorgesehenen Anschlussstutzen (25, 26) gleichachsig übereinander im Bereich einer stirnseitigen Seitenfläche der Batterie (1) angeordnet und über T-förmige Abzweigungen (38) oder 90°-Krümmer (39) an einer parallel dazu verlaufenden, gemeinsamen Anschlussleitung (40, 41) angeschlossen sind.

15. Batterie nach Anspruch 14, **dadurch gekennzeichnet, dass** an mindestens einer der Anschlussleitungen (40, 41) ein elektrischer Heizkörper (44) vorgesehen ist.

16. Batterie nach einem der Ansprüche 1 bis 15, **dadurch gekennzeichnet, dass** mindestens ein Zellenblock (3 - 6) von miteinander verbundenen Stabzellen (7) in einem thermisch isolierten Batteriegehäuse (2) eingeschlossen ist, wobei innerhalb eines höher belastbaren Aussenbehälters (45) ein aus Isoliermaterial bestehender Innenbehälter (46) eingesetzt ist.

17. Batterie nach Anspruch 16, **dadurch gekennzeichnet, dass** zwischen parallel zu flachen Wärmetauschern (19) verlaufenden Wänden (54, 55) des Aussenbehälters (45) und Innenbehälters (46) eine biegesteife Aussteifungsschicht (56) eingeschlossen ist.

18. Batterie nach Anspruch 16, **dadurch gekennzeichnet, dass** die Aussteifungsschicht (56) eine ihrer Schichtdicke entsprechende Profilierung aufweist, wobei zwischen ihr und der angrenzenden Wand (55) des Innenbehälters (45) eine Druckverteilungsplatte (58) angeordnet ist.

19. Batterie nach einem der Ansprüche 16 bis 18, **dadurch gekennzeichnet, dass** das Isoliermaterial des Innenbehälters (46) nach Art eines Vakuum-Paneels zwischen einer Aussen- und Innenwand (48, 49) unter Vakuum ein körniges Material (50) einschliesst.

20. Batterie nach einem der Ansprüche 16 bis 19, **dadurch gekennzeichnet, dass** eine Verschlusswand des Innenbehälters (46) Teil einer teleskopartig in diesen eingefügte Verschlusskappe (47) bildet.

21. Batterie nach einem der Ansprüche 16 bis 20, **dadurch gekennzeichnet, dass** ein Verschlussdeckel (53) des Aussenbehälters (45) zwischen einer Aussen- und einer Innenwand unter Vakuum ein körniges Material einschliesst.

## Claims

1. A battery having rod cells (7) arranged next to one another in a plurality of rows and parallel and serially electrically connected to one another to form at least one cell block (3 - 6), which rod cells are in thermally conductive contact with at least one cooling element (19), **characterised in that** end-side electrical contacts (13, 14) of a row of rod cells (7) extending over a width of the battery are in each case electrically connected to one another in parallel by means of a common contact plate (15) and these contact plates (15) are in thermally-conductive connection with a flat heat exchanger (19), which extends parallel to it and through which liquid flows, which heat exchanger (19) consists of a film material forming a heat exchange pocket (19), wherein, parallel to the heat exchange pocket (19), a pressure pocket (28) at least approximately corresponding to the size thereof and filled with a compressible medium.

2. The battery according to Claim 1, **characterised in that** the heat exchanger (19) is in direct contact with the electrically connecting contact plate (15) and at least the surface thereof resting on the contact plate (15) consists of an electrically insulating material.

3. The battery according to Claim 1 or 2, **characterised in that** the foil material is multi-layered and the outer layer consists of an electrically insulating material.

4. The battery according to one of Claims 1 to 3, **characterised in that** a common contact plate (15) in each case extends over the entire length of two rows of rod cells (7), which run parallel to one another, so that contact plates (15) provided at both ends of the rod cells (7) in each case electrically and mechanically connect the same to one another both in parallel and in series.

5. The battery according to one of Claims 1 to 4, **characterised in that** the poles (13, 14) of the rod cells (7) are connected to a contact plate (15) by means of point-by-point laser welding in accordance with scanner welding technology.

6. The battery according to Claim 5, **characterised in that** a plurality of welding points (17) are provided in each case for the connection between the poles (13, 14) of the rod cells (7) and the contact plates (15).

7. The battery according to one of Claims 1 to 6, **characterised in that** the contact plates (15) are stamped from sheet metal and are arranged in such a manner that the stamping burr thereof is located on the side facing away from the heat exchange pocket (19).

8. The battery according to one of Claims 1 to 7, **characterised in that** the rod cells (7) are fastened through the contact plates (15) with a gap (8) between them.

9. The battery according to one of Claims 1 to 8, **characterised in that** a flow guide baffle (27) is enclosed between the two film walls (21, 22) of the heat exchange pocket (19).

10. The battery according to one of Claims 1-9, **characterised in that** a pressure distribution plate (29, 35) is arranged between the pressure pocket (28) and the heat exchange pocket (19).

11. The battery according to one of Claims 1 to 10, **characterised in that** a pressure plate (35), which is tensioned by a pressure pocket (36) and extends perpendicularly to a terminal edge (37) of each contact plate (15), bears against the terminal edge (37).

12. The battery according to one of Claims 1 to 11, **characterised in that** a heat exchange pocket (19) bearing against contact plates (15) has connection nozzles (25, 26) for the flowing through by a fluid heat transfer medium, which connectors are directed perpendicularly to the plane of the heat exchange pocket (19).

13. The battery according to one of Claims 1 to 12, **characterised in that** the rod cells (7) that are electrically connected to one another are grouped in a plurality of cell blocks (3 - 6) arranged one above the other, wherein a heat exchange pocket (19) is provided between each of these cell blocks (3 - 6) and additionally at the outer cell blocks (3, 6) of this grouping.

14. The battery according to Claim 12 and 13, **characterised in that** the connection nozzles (25, 26) provided at each of the mutually parallel heat exchange pockets (1) of the cell blocks (3 - 6) are arranged coaxially above one another in the region of an end-face side face of the battery (1) and are connected via T-shaped branches (38) or 90° elbows (39) to a common connecting line (40, 41) running parallel thereto.

15. The battery according to Claim 14, **characterised in that** an electrical heating body (44) is provided on at least one of the connecting lines (40, 41).

16. The battery according to one of Claims 1 to 15, **characterised in that** at least one cell block (3 - 6) is enclosed by rod cells (7), which are connected to one another, in a thermally insulated battery housing (2), wherein an internal container (46) made from insulating material is inserted within a more loadable external container (45).

17. The battery according to Claim 16, **characterised in that** a flexurally rigid stiffening layer (56) is enclosed between walls (54, 55) of the external container (45) and internal container (46), which run parallel to flat heat exchangers (19).

18. The battery according to Claim 16, **characterised in that** the stiffening layer (56) has a profiling corresponding to the layer thickness thereof, wherein a pressure distribution plate (58) is arranged between the same and the adjacent wall (55) of the internal container (45).

19. The battery according to one of Claims 16 to 18, **characterised in that** the insulating material of the internal container (46) encloses a granular material (50) under vacuum in the manner of a vacuum panel between an external and internal wall (48, 49).

20. The battery according to one of Claims 16 to 19, **characterised in that** a closure wall of the internal container (46) forms part of a closure cap (47) inserted into the same telescopically.

21. The battery according to one of Claims 16 to 20, **characterised in that** a closure cover (53) of the external container (45) encloses a granular material under vacuum between an outer and an inner wall.

## Revendications

1. Batterie avec plusieurs éléments en barres (7) juxtaposés en plusieurs rangées, reliés ensemble électriquement de manière parallèle et en série en formant au moins un bloc d'éléments (3-6), lesquels éléments sont en contact thermo-conducteur avec au moins un élément de refroidissement (19), **caractérisée en ce que** des contacts électriques du côté d'extrémité (13, 14) d'une rangée d'éléments en barres (7) s'étendant sur une largeur de la batterie sont respectivement reliés électriquement ensemble en parallèle grâce à une plaque de contact (15) commune et **en ce que** ces plaques de contact (15) sont en liaison thermo-conductrice avec un échangeur de chaleur (19) plat traversé par du liquide s'étendant parallèlement à elle, lequel se compose d'un matériau en feuilles formant une poche d'échange de chaleur (19) moyennant quoi, parallèlement à la poche d'échange de chaleur (19), on prévoit une poche de pression (28) correspondant au moins approximativement à sa taille, remplie avec un fluide compressible.

2. Batterie selon la revendication 1, **caractérisée en ce que** l'échangeur de chaleur (19) se trouve en contact direct avec la plaque de contact (15) assurant la liaison électrique, et **en ce qu'**au moins sa surface en appui contre celle-ci se compose d'un matériau d'isolation électrique.

3. Batterie selon la revendication 1 ou 2, **caractérisée en ce que** le matériau en feuilles est multicouches et **en ce que** la couche extérieure se compose d'un matériau d'isolation électrique.

4. Batterie selon l'une des revendications 1 à 3, **caractérisée en ce qu'**une plaque de contact (15) commune s'étend respectivement sur toute la longueur de deux rangées d'éléments en barres (7) s'étendant parallèlement entre elles, de sorte que des plaques de contact (15) respectivement prévues aux deux extrémités des éléments en barres (7) relient celles-ci électriquement et mécaniquement ensemble de manière parallèle tout comme également en série.

5. Batterie selon l'une des revendications 1 à 4, **caractérisée en ce que** les pôles (13, 14) des éléments en barres (7) sont reliés à une plaque de contact (15) grâce à un soudage laser par points conformément à la technique de soudage par scanner.

6. Batterie selon la revendication 5, **caractérisée en ce que**, pour la liaison entre les pôles (13, 14) des éléments en barres (7) et les plaques de contact (15), on prévoit respectivement plusieurs points de soudage (17).

7. Batterie selon l'une des revendications 1 à 6, **caractérisée en ce que** les plaques de contact (15) sont découpées dans une tôle et sont disposées de manière à ce que leur bavure de découpage se trouve sur le côté tournant le dos à la poche d'échange de chaleur (19).

8. Batterie selon l'une des revendications 1 à 7, **caractérisée en ce que** les éléments en barres (7) sont fixés avec un interstice (8) entre eux grâce aux plaques de contact (15).

9. Batterie selon l'une des revendications 1 à 8, **caractérisée en ce qu'**une grille de guidage d'écoulement (27) est enfermée entre les deux parois en feuilles (21, 22) de la poche d'échange de chaleur (19).

10. Batterie selon l'une des revendications 1-9, **caractérisée en ce qu'**une plaque de répartition de pression (29, 35) est disposée entre la poche de pression (28) et la poche d'échange de chaleur (19).

11. Batterie selon l'une des revendications 1 à 10, **caractérisée en ce que**, à une arête d'extrémité (37) de chaque plaque de contact (15), une plaque de pression (35) s'étendant perpendiculairement à elle, déformée par une poche de pression (36), est en appui.

12. Batterie selon l'une des revendications 1 à 11, **caractérisée en ce qu'**une poche d'échange de chaleur (19) en appui contre des plaques de contact (15) présente des embouts de raccords (25, 26) pour sa traversée par un caloporteur liquide, lesquels sont orientés perpendiculairement au plan de la poche d'échange de chaleur (19).

13. Batterie selon l'une des revendications 1 à 12, **caractérisée en ce que** les éléments en barres (7) reliés électriquement ensemble sont groupés en plusieurs blocs d'éléments (3-6) disposés les uns au-dessus des autres, moyennant quoi entre chacun de ces blocs d'éléments (3-6), et de manière additionnelle à l'extérieur au niveau des blocs d'éléments (3, 6) extérieurs de ce groupement, on prévoit respectivement une poche d'échange de chaleur (19).

14. Batterie selon la revendication 12 et 13, **caractérisée en ce que** les embouts de raccords (25, 26) prévus au niveau de chacune des poches d'échange de chaleur (1) parallèles entre elles des blocs d'éléments (3-6), sont disposés de manière iso-axique les uns au-dessus des autres dans la zone d'une surface latérale côté frontal de la batterie (1) et sont raccordés, via des ramifications (38) en forme de T ou des coudes à 90° (39), à une ligne de raccordement (40, 41) commune s'étendant parallèlement avec.

15. Batterie selon la revendication 14, **caractérisée en ce que** l'on prévoit un élément chauffant (44) électrique à au moins l'une des lignes de raccordement (40, 41).

16. Batterie selon l'une des revendications 1 à 15, **caractérisée en ce qu'**au moins un bloc d'éléments (3-6) d'éléments en barres (7) reliés ensemble est enfermé dans un boîtier de batterie (2) isolé thermiquement, moyennant quoi à l'intérieur d'un récipient extérieur (45) pouvant être davantage sollicité, un récipient intérieur (46) se composant de matériau isolant est mis en place.

17. Batterie selon la revendication 16, **caractérisée en ce qu'**une couche de renforcement (56) résistant à la flexion est enfermée entre des parois (54, 55), s'étendant parallèlement à des échangeurs de chaleur (19) plats, du récipient extérieur (45) et du récipient intérieur (46).

18. Batterie selon la revendication 16, **caractérisée en ce que** la couche de renforcement (56) présente un profilage correspondant à son épaisseur de couche, une plaque de répartition de pression (58) étant disposée entre elle et la paroi (55) adjacente du récipient intérieur (45).

19. Batterie selon l'une des revendications 16 à 18, **caractérisée en ce que** le matériau isolant du récipient intérieur (46) enferme sous vide, à la manière d'un panneau sous vide, entre une paroi externe et interne (48, 49), un matériau granuleux (50).

20. Batterie selon l'une des revendications 16 à 19, **caractérisée en ce qu'**une paroi de fermeture du récipient intérieur (46) forme une partie d'un capuchon de fermeture (47) inséré de manière télescopique dans celui-ci.

21. Batterie selon l'une des revendications 16 à 20, **caractérisée en ce qu'**un couvercle de fermeture (53) du récipient extérieur (45) enferme sous vide un matériau granuleux entre une paroi externe et interne.
